(19) Europäisches Patentamt
European Patent Office
Office européen des brevets

(11) Numéro de publication : **0 496 662 B1**

(12) **FASCICULE DE BREVET EUROPEEN**

(45) Date de publication du fascicule du brevet :
**02.08.95 Bulletin 95/31**

(51) Int. Cl.⁶ : **G01J 9/02**

(21) Numéro de dépôt : **92400149.8**

(22) Date de dépôt : **21.01.92**

(54) **Dispositif interférométrique notamment stellaire, comportant une ligne à retard.**

(30) Priorité : **22.01.91 FR 9100674**

(43) Date de publication de la demande :
**29.07.92 Bulletin 92/31**

(45) Mention de la délivrance du brevet :
**02.08.95 Bulletin 95/31**

(84) Etats contractants désignés :
**DE ES GB IT NL PT SE**

(56) Documents cités :
**EP-A- 0 398 772
US-A- 4 132 940
APPLIED OPTICS, vol. 14, no. 9, 1 septembre
1975, pages 2067-2084; P. CONNES et al:
"Astronomical Fourier Spectrometer"**

(56) Documents cités :
**APPLIED OPTICS, vol. 9, no. 2, 1 février 1970,
pages 301-306; R.SCHINDLER: "A Small
High-Speed Interferometer for Aircraft Applications"**

(73) Titulaire : **AEROSPATIALE Société Nationale
Industrielle
37, Boulevard de Montmorency
F-75781 Paris Cédex 16 (FR)**

(72) Inventeur : **Koehler, Bertrand
Mas Marelli,
Les Jaisons
F-06530 Peymeinade (FR)**

(74) Mandataire : **Rinuy, Santarelli
14, avenue de la Grande Armée
F-75017 Paris (FR)**

Jouve, 18, rue Saint-Denis, 75001 PARIS

## Description

La présente invention concerne la commmande en déplacement avec une très grande précision (quelques nanomètres), d'un élément optique d'une ligne à retard à oeil de chat au sein d'un système d'interférométrie stellaire. Plus généralement elle concerne un dispositif interférométrique, tel qu'un spectromètre à transformée de FOURIER, dans lequel on cherche non seulement à stabiliser dynamiquement l'élément optique au cours d'un mouvement programmé, de façon à éliminer l'effet des vibrations, mais en outre à compenser des différences de chemin optique perturbatrices générées indépendamment de cet élément optique et de son mouvement, dans le reste du dispositif interférométrique, voire à l'extérieur de celui-ci.

Un tel déplacement programmé sans vibration d'un élément optique est nécessaire, par exemple pour contrôler une ligne à retard optique prévue au sein d'un interféromètre stellaire à recombinaison cohérente. Dans un tel cas, lorsque la distance (appelée base) séparant les télescopes est de l'ordre de 100 mètres, l'égalisation des chemins optiques, malgré la rotation de la Terre, nécessite un déplacement du dispositif rétro-réflecteur de la ligne à retard optique sur une distance de plusieurs mètres, avec une vitesse de quelques dizaines de millimètres par seconde, et une précision de positionnement, en valeur moyenne de quelques micromètres, et en valeur instantanée (pendant un temps de pose de quelques centièmes de seconde) de quelques nanomètres (amplitude des vibrations) : les contraintes sont donc plus sévères sur l'erreur dynamique que sur l'erreur statique.

De telles caractéristiques de déplacement sont également nécessaires dans le cas où l'on chercherait à réaliser l'égalité des chemins optiques par le déplacement des télescopes eux-mêmes.

Par la publication de R.W. HOLM : thèse MIT 1986 "A high Speed High-Resolution Optical Delay Line For Stellar Interferometry Applications", on connaît un dispositif de déplacement d'un "oeil de chat" dans une ligne à retard, constitué par un chariot de type esclave se déplaçant sur des rails, ledit chariot comportant un châssis, mobile sur des pivots flexibles et sur lequel est fixé l'oeil de chat.

Le miroir secondaire de l'oeil de chat y est porté par un actionneur piézo-électrique. La position du châssis mobile par rapport au chariot est contrôlée par un détecteur de déplacement et un actionneur linéaire du type Haut-Parleur ("voice coil"). Enfin, le déplacement du chariot est assuré par un moteur pas-à-pas.

Le chemin optique introduit par la ligne à retard y est mesuré par un interféromètre laser. Le signal d'erreur est injecté dans la boucle d'asservissement de l'actionneur piézo-électrique. La saturation de cet actionneur est évitée par l'action de l'actionneur linéaire, et la saturation de l'actionneur linéaire est évitée par l'action du moteur pas-à-pas (d'où appellation d'esclave). Il y a pour cela trois boucles d'asservissement imbriquées l'une dans l'autre.

Ce dispositif de déplacement permet de réaliser un déplacement sans vibrations de l'oeil de chat, assimilable à un déplacement sans frottements. Il a de bonnes performances car le signal d'erreur correspond directement à la grandeur à asservir, c'est-à-dire au chemin optique.

Cependant, il est mal adapté aux grandes vitesses du fait que la métrologie laser devrait alors avoir une résolution de quelques nanomètres alors que le rapport vitesse maximale de variation de chemin optique du chariot sur résolution est limité par l'électronique pour des raisons de faisabilité.

De plus, ce dispositif est onéreux en raison de la nécessité d'avoir une métrologie laser performante laquelle ne peut fonctionner bien que dans une enceinte sous vide.

Un dispositif de ce type avait déjà été décrit précédemment dans la publication : P. CONNES 1975 Applied Optics, Vol 14 n° 9.p 2067 - 2084.

La demande de brevet EP-0.398.772 a décrit un dispositif de déplacement programmé d'un chariot portant, par l'intermédiaire d'une liaison flexible, une charge utile dont le déplacement doit s'effectuer sans vibration sur une grande course et à grande vitesse, tel que ceux utilisés pour les lignes à retard d'un interféromètre stellaire et ne présentant pas les inconvénients cités ci-dessus.

Ce document a proposé à cet effet un dispositif de commande en déplacement sans vibrations destiné au contrôle statique et dynamique d'un élément optique mobile, au sein d'un dispositif interférométrique, suivant une direction, comportant une voie de guidage, un chariot portant une charge utile comportant cet élément optique et mobile le long de la voie de guidage, un moteur pour l'entraînement de ce chariot le long de cette voie de guidage, un élément de commande en entraînement connecté à ce moteur d'entraînement pour déplacer ce chariot selon une loi de consigne prédéterminée, cette charge utile étant liée au chariot par des éléments de liaison flexible autorisant parallèlement à ladite direction un débattement relatif entre le chariot et la charge utile, et au moins un actionneur prévu pour agir sur au moins une partie de l'élément optique sous le contrôle d'au moins une boucle d'asservissement en stabilisation connectée à au moins un second capteur, ce dispositif étant caractérisé en ce que cette boucle d'asservissement en stabilisation est indépendante de l'élément de commande en entraînement, en ce que le second capteur est un accéléromètre porté par la charge utile et sensible à l'accélération de la charge utile parallèlement à ladite direction, en ce que l'actionneur agit sur l'ensemble de la charge utile en prenant appui sur le chariot, en ce que cette boucle d'asservissement en stabilisation comporte un étage de filtrage du signal de l'accéléromètre, et en ce que l'élément de commande en entraînement comporte une boucle d'asservissement connectée à un capteur de position adapté à détecter la position du chariot sur la voie de guidage.

En pratique, la charge utile est munie d'un accéléromètre mesurant les accélérations dans le sens du déplacement du chariot et porte un élément primaire d'un actionneur linéaire électromagnétique dont l'élément secondaire est fixé sur le chariot et la force fournie par le moteur linéaire est contrôlée par le signal issu de l'accéléromètre de façon à ce que les vibrations du chariot ne soient pas transmises à l'élément utile.

Selon des dispositions préférées :
- l'étage de filtrage de la boucle d'asservissement en stabilisation était du deuxième ordre, admettant une fonction de transfert F(p) de la forme :

$$F(p) = \frac{a_2 p^2 + a_1 p + a_0}{p^2 + b_1 p + b_0}$$

- l'accéléromètre était du type piézo-électrique, ou pendule asservi,
- l'actionneur était du type "haut-parleur",
- la voie de guidage était à rouleaux croisés,
- le moteur d'entraînement était un moteur linéaire sans balais,
- le capteur de position était du type incrémental,
- la boucle d'asservissement en entraînement était du type numérique position/vitesse,
- l'élément optique était un rétroréflecteur du type "oeil de chat" prévu dans une ligne à retard,
- l'élément optique était l'un des télescopes d'un interféromètre stellaire, mobile en direction d'une station de recombinaison.

Ce document proposait également un interféromètre stellaire comportant un ou plusieurs dispositifs de commande en déplacement du type précité.

En pratique, l'originalité de cette invention résidait notamment dans le fait que, pour amortir très efficacement les vibrations d'un élément optique mobile suivant une trajectoire donnée selon une cinétique donnée, elle proposait, à l'encontre du préjugé de l'homme de métier en la matière, de renoncer à toute interconnexion entre les asservissements en entraînement et ceux en stabilisation ; de manière surprenante la grande simplicité (et la grande fiabilité) qui en résultait pouvait être combinée avec un excellent amortissement.

Cette solution permettait ainsi un déplacement de très grande précision de l'oeil de chat, selon un mouvement programmé, sur de grandes courses (jusqu'à 100 m) et ce sans nécessiter de métrologie laser.

L'invention a pour objet de perfectionner les enseignements de ce document EP-0.398.772 en permettant en outre de compenser en temps réel des perturbations de différence de marche optique générées en amont ou en aval de la ligne de retard, donc aléatoires et inconnues, pouvant provenir notamment :
- de dérives lentes de pointage en cas de dispositif interférométrique embarqué sur une plate-forme spatiale,
- de déformations vibratoires (par exemple de l'ordre de 10 Hz) pouvant provenir de la souplesse de cette plate-forme spatiale,
- de turbulences atmosphériques en cas d'observations au sol.

L'invention propose ainsi un dispositif interférométrique comportant deux collecteurs optiques destinés à être pointés sur un objet, une station de recombinaison à laquelle ces collecteurs optiques sont connectés optiquement par deux bras d'interféromètre dont l'un comporte une ligne de retard comportant une charge utile optique formée d'un miroir primaire et d'un miroir secondaire et commandée en déplacement rectiligne suivant une direction sur une voie de guidage par un dispositif comportant :
- un chariot portant un châssis dont ce miroir primaire est solidaire et mobile le long de la voie de guidage, un moteur pour l'entraînement de ce chariot le long de cette voie de guidage, une première boucle d'asservissement de ce moteur d'entraînement, connectée à un capteur de position adapté à détecter la position du chariot sur la voie de guidage, pour déplacer ce chariot selon une loi de consigne prédéterminée,
- des éléments de liaison flexible reliant ce châssis au chariot autorisant parallèlement à ladite direction un débattement relatif entre le chariot et le châssis, au moins un actionneur pour agir, en prenant appui sur le chariot, sur le châssis sous le contrôle d'une deuxième boucle d'asservissement indépendante de la première boucle d'asservissement et connectée à un second capteur, formé d'un accéléromètre porté par le châssis et sensible à l'accélération de ce châssis parallèlement à ladite direction, caractérisé en ce que le miroir secondaire est relié à ce châssis par un actionneur piézo-électrique agissant sur ce miroir secondaire parallèlement à cette direction en étant commandé par une troisième boucle d'asservissement recevant en entrée un signal d'erreur de chemin optique généré dans la station de recombinaison à partir des franges d'un objet situé dans le champ d'observation des collecteurs optiques et délivrant également à l'une au moins des première et seconde boucles d'asservissement un signal de désaturation de l'actionneur piézo-électrique.

Ainsi, l'invention propose d'ajouter à la commande en déplacement de l'oeil de chat une troisième boucle d'asservissement destinée au contrôle en position du miroir secondaire, lequel est désormais non plus fixé à la charge utile mais soumis à l'action d'un actionneur piézo-électrique (sur une course en pratique de l'ordre de 10 micromètres), en utilisant comme signal d'entrée le signal d'erreur de chemin optique généré dans un étage de recombinaison de l'interféromètre à partir des franges de l'objet observé ou, selon une disposition préférée, d'un objet de référence choisi dans le champ d'observation, par exemple en raison de sa brillance et/ou de la connaissance préalable de ses caractéristiques lumineuses. La désaturation de cet actionneur piézo-électrique se fait par l'une au moins des deux autres boucles d'asservissement, de préférence par seulement la première boucle d'asservissement. La loi de contrôle de désaturation est de préférence du type proportionnel-dérivée ; elle peut aussi être du type proportionnel-intégrale.

En fait, la nature des première et seconde boucles d'asservissement minimise les risques de décrochage.

En fait, la mise en oeuvre d'un tel actionneur piézo-électrique a déjà été proposée par P. CONNES dans son article précité, mais c'était pour réaliser les fonctions réalisées par les première et seconde boucles d'asservissement du document EP-0.398.772. De plus, la commande de cet actionneur piézo-électrique se faisait à partir d'une mesure laser, cet actionneur étant désaturé par la seconde boucle elle-même désaturée par la première boucle à moteur pas-à-pas. Enfin, ces première et seconde boucles étaient imbriquées.

En tout état de cause, cette solution connue avait les inconvénients suivants :

- difficile à qualifier pour l'espace à cause du laser (durée de vie, fiabilité, sensibilité aux contraintes d'environnement),
- grandes courses difficiles à obtenir (> 30 mètres) à cause de la diffusion de la lumière laser sur les surfaces réfléchissantes dans l'oeil de chat,
- coût de la métrologie laser et du réglage des trois boucles imbriquées,
- risque de mélange du signal laser avec les signaux stellaires, donc pollution du signal astronomique stellaire.

L'invention couvre également un interféromètre du type précité monté sur une plate-forme spatiale, en pratique stabilisée 3-axes.

Des objets, caractéristiques et avantages de l'invention ressortent de la description qui suit, donnée à titre d'exemple non limitatif, en regard des dessins annexés sur lesquels :

- la figure 1 est une vue schématique générale d'un système d'interférométrie stellaire conforme à l'invention,
- la figure 2A est une vue schématique détaillée de la commande en mouvement des éléments de la ligne de retard,
- la figure 2B en est un schéma de principe,
- les figures 3 et 4 représentent en fonction de la fréquence des perturbations supposées être toutes contenues dans le chemin optique $Z_R$, des courbes expérimentales de gain et de déphasage pour la fonction de transfert en boucle fermée ($Z/Z_R$) de la troisième boucle de la figure 2,
- les figures 5 et 6 représentent en fonction de cette fréquence de perturbations des courbes expérimentales de gain et de déphasage pour la courbe de réjection ($Z-Z_R/Z_R$),
- les figures 7 et 8 représentent des courbes similaires pour la fonction de transfert $X_1/Z_R$,
- les figures 9 et 10 représentent des courbes similaires pour la fonction de transfert $X_2/Z_R$,
- les figures 11 et 12 représentent des courbes similaires par la fonction transfert $X_3/Z_R$, et
- les figures 13 et 14 représentent des courbes similaires pour la fonction de transfert ($X_2-X_1)/Z_R$.

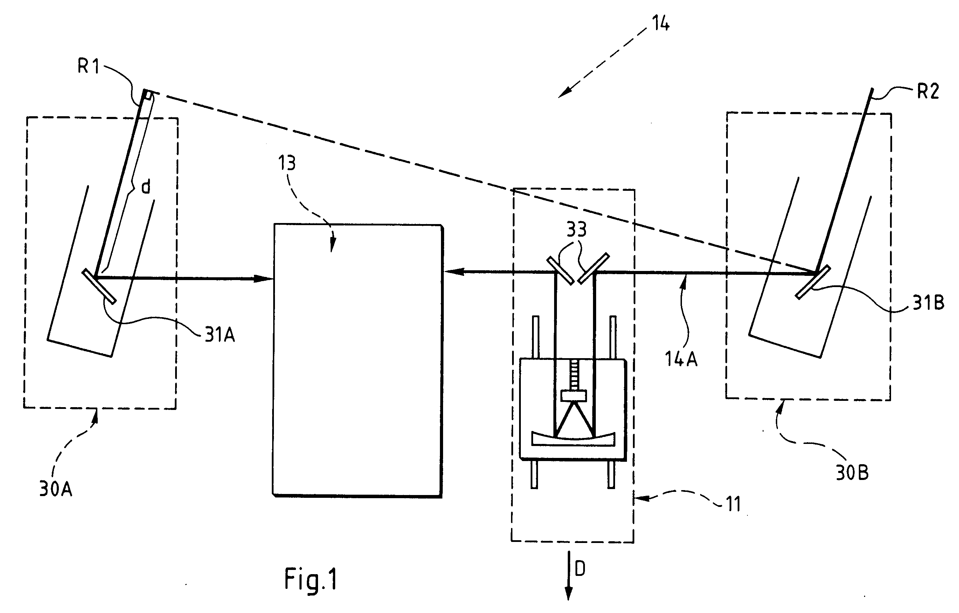

La figure 1 montre un interféromètre stellaire 14 comportant deux télescopes 30A et 30B recevant respectivement des rayonnements R1 et R2 provenant d'un même objet du ciel (non représenté). Ces télescopes comportent des miroirs 31A et 31B qui renvoient ces rayonnements incidents vers une station 13 de recombinaison d'ondes dans laquelle se forment des franges d'interférences caractéristiques du rayonnement émis par cet objet.

Le problème est d'ajuster, à chaque instant, le chemin optique dans l'un 14A des bras de l'interféromètre stellaire afin de compenser en permanence des différences de marche $\underline{d}$ liées aux variations de la position, dans le ciel, de l'objet observé et aux perturbations extérieures. La figure 1 montre la différence de marche à compenser. Cette différence de marche vaut B.sinz où B est la distance séparant les télescopes 30A et 30B et z est l'angle zénithal de l'objet. L'ajustement du chemin optique se fait ici par l'introduction, dans un des bras de l'interféromètre, d'un dispositif 11 appelé "ligne à retard" constitué d'un rétroréflecteur optique mobile selon une direction D.

Cette solution, ici décrite en détail, présente l'avantage d'être simple de réalisation et de mise en oeuvre.

Les spécifications techniques de besoins pour un dispositif de ligne à retard dépendent essentiellement de la distance séparant les télescopes, de l'orientation de la ligne joignant les télescopes par rapport à l'axe Nord-Sud, de la position, dans le ciel, des objets à observer, du temps de pose pendant lequel l'image des franges d'interférence est intégrée et de la précision requise sur la mesure du contraste des franges. Les spécifications essentielles sont :

1. la course linéaire de l'équipage mobile de la ligne à retard (quelques mètres),

2. la vitesse de déplacement du rétroréflecteur (variable de zéro à quelques dizaines de millimètres/seconde),

3. la précision de positionnement de l'équipage mobile (rétroréflecteur) en valeur moyenne (quelques micromètres),

4. la précision dynamique de positionnement du rétroréflecteur autour de sa position moyenne, c'est-à-dire la précision de la compensation des différences de chemin optique. Cette précision dynamique constitue le point le plus critique car elle conditionne la précision (quelques pour cents) sur la mesure du contraste des franges. Elle s'exprime en écart quadratique moyen d'erreur de position (quelques nanomètres) sur une fenêtre temporelle correspondant au temps de pose de l'observation (quelques fractions de seconde à quelques minutes).

5. l'amplitude (quelques centimètres à quelques micromètres selon la fréquence) et la fréquence (jusqu'à quelques dizaines de Hertz) des différences de chemin optique à corriger par la ligne à retard.

La difficulté réside dans la satisfaction simultanée des spécifications 2, 4 et 5.

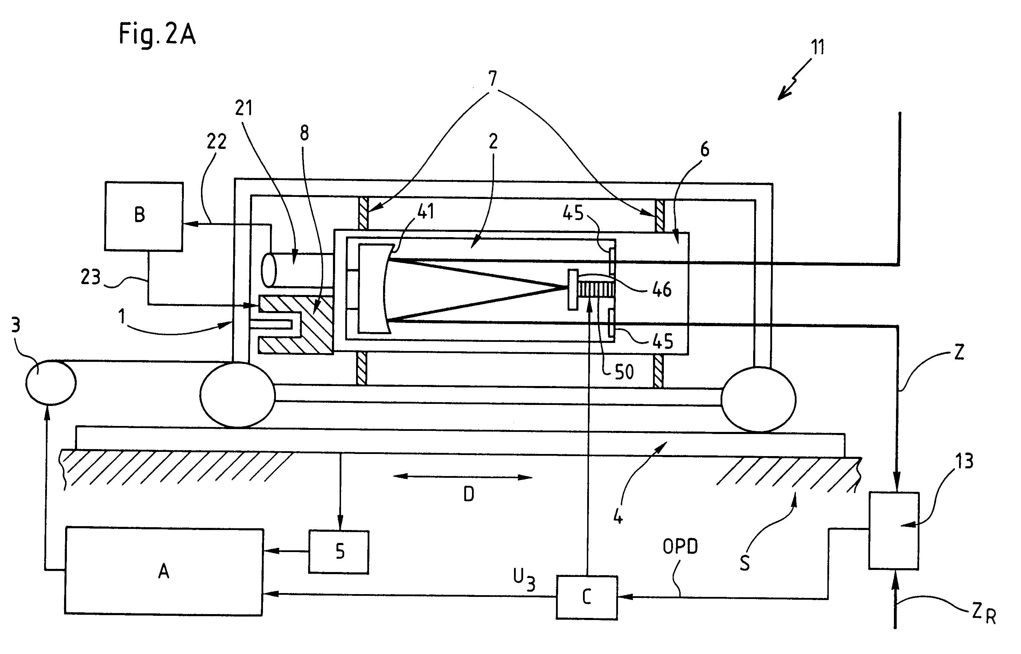

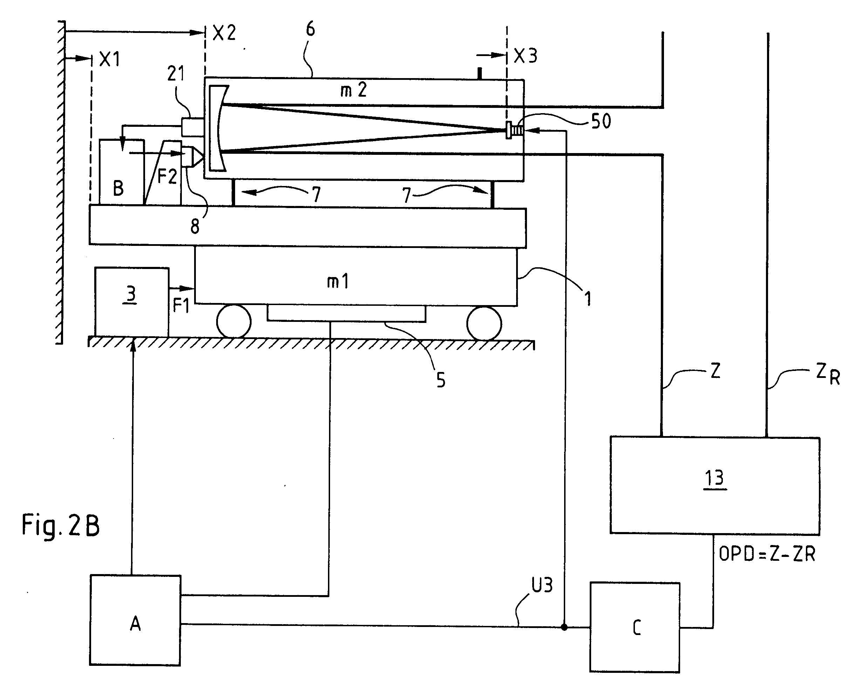

Ces contraintes sont satisfaites grâce au dispositif de la figure 2.

Il faut noter à propos de la figure 1 que, pour des raisons de lisibilité du dessin, la direction D a été représentée dans le même plan que celui des rayons R1 et R2, c'est-à-dire dans un plan sensiblement vertical. Toutefois, en pratique, cette direction est horizontale ; il suffit pour cela d'orienter convenablement les miroirs de renvoi 33 prévus à l'entrée et à la sortie de la ligne à retard 11. De préférence, mais pas nécessairement, la direction D est perpendiculaire à la direction commune des rayons entrant et sortant de cette ligne de retard.

De même à la figure 2, qui correspond pour l'essentiel à une vue dans un plan vertical, le trajet optique a été représenté dans ce plan pour des raisons de commodité alors qu'en pratique il est situé dans un plan horizontal.

Cette ligne à retard 11 comporte, comme celle du document EP 0.398.772, outre les miroirs de renvoi 33 précités, un dispositif de commande en déplacement que l'on peut décomposer en une unité de translation et, porté par celle-ci, un étage de stabilisation.

L'unité de translation comporte un socle S portant un dispositif de guidage 4, un chariot mobile 1, un moteur 3 muni d'une transmission, et un capteur de position 5 relié à un asservissement A (avec un étage de puissance) contrôlant le moteur 3 en fonction des signaux de sortie du capteur de position et d'une loi de consigne élaborée à l'avance.

Pour des raisons de coût, cette unité de translation est constituée à partir de matériels disponibles sur le marché. Différentes technologies existent : guidage par galets sur rails rectifiés, par billes recirculantes, par friction, par rouleaux croisés, par coussin d'air (etc...), transmission par courroie, par tige entraînée par galet à friction, par vis de précision et écrou à recirculation de billes, (etc...), entraînement par moteur continu, moteur couple, moteur pas à pas, moteur linéaire (etc...).

L'exigence principale du dispositif étant un faible niveau de vibration en cours de déplacement, le choix entre ces différentes technologies est dicté par le niveau de vibration généré par chacun des éléments.

Un guidage par galets sur rails rectifiés est une bonne solution mais rarement commercialisée. Un guidage par billes recirculantes ou friction est générateur de vibrations, à haute vitesse notamment. Un guidage par rouleaux croisés non recirculants est meilleur qu'un guidage à billes recirculantes mais il est mal adapté aux grandes courses (supérieures à 1m). Un guidage sur coussin d'air peut apporter une amélioration bien que des instabilités de l'écoulement de l'air puissent parfois générer des vibrations importantes dans des gammes de fréquence entre 100 et 1000 Hz.

Une transmission par courroie fait en général apparaître des vibrations longitudinales engendrées par la souplesse de la courroie. Une transmission par tige et galet n'est applicable qu'à de faibles courses. Une transmission par vis-écrou est mal adaptée aux déplacements à haute vitesse et ne convient pas aux grandes courses.

Un moteur couple donne de bonnes performances à basse vitesse et permet un entraînement direct éliminant les vibrations engendrées par un réducteur. Un moteur pas à pas est mal adapté car le passage successif des pas se traduit par des vibrations longitudinales du chariot mobile. Un moteur linéaire présente l'avantage d'engendrer directement une force, sans contact, entre le socle et le chariot mobile éliminant ainsi la source de vibration que représente tout mécanisme de transmission.

La solution retenue est une unité de translation de course 1 m, comprenant un socle 5 en acier, un guidage par rouleaux croisés 4, un moteur linéaire 3 sans balais à aimants permanents fixes, un capteur de position incrémental 5 de type règle optique et un asservissement numérique de position/vitesse. Ce matériel est fabriqué par exemple par la Société ANORAD (USA) sous les références ANORIDE 14-40 et IAC-186.

L'étage de stabilisation porté par le chariot 1 comprend une liaison flexible 7 reliant un châssis 6 au chariot, une charge utile 2 portée par le châssis, un capteur inertiel tel qu'un accéléromètre 21, un actionneur linéaire 8, et une boucle d'asservissement B. Dans le cadre d'une modification possible, l'étage de stabilisation peut également comprendre un second capteur de position mesurant la position relative de charge utile 2 par rapport au chariot 1.

La liaison flexible 7 a pour rôle de permettre des déplacements relatifs dans la direction (D) entre le chariot 1 et le châssis 6. Cette liaison peut être réalisée par deux jeux décalés axialement de trois lames flexibles disposées à 120°. Cette liaison présente l'avantage d'être sans jeu et sans frottement. La fréquence propre naturelle de la liaison se situe autour de 5 Hz pour une masse de (châssis + charge utile) de 15 kg. En variante de réalisation non représentée, cette liaison peut être constituée par seulement la lame supérieure de chaque jeu, en tirant partie de la gravité.

Le châssis 6 est par exemple un tube en "invar" (par exemple de 250 mm. de diamètre, 600 mm de long, de masse 3 kg), fermé à une extrémité par un barillet portant un miroir primaire 41 et à l'autre extrémité par une plaque de fermeture qui comporte deux ouvertures circulaires destinées à recevoir deux fenêtres 45 de fermeture de l'enceinte constituée par le châssis.

La charge utile 2 est un dispositif optique rétroréflecteur de type "oeil de chat" constitué du miroir primaire 41, d'un miroir secondaire 46 et des deux fenêtres de fermeture 45. Ce dispositif permet de renvoyer le faisceau lumineux incident dans la direction opposée, tout en étant très peu sensible aux mouvements latéraux et angulaires dus aux imperfections du système 4 de guidage. Les fenêtres (ou lames) de fermeture assurent l'étanchéité aux poussières de l'intérieur du châssis afin d'éviter la dégradation des qualités optiques qui résulteraient d'un dépôt de poussières sur les miroirs. Le miroir primaire 41 est un miroir parabolique en "zérodur" de diamètre 200 mm et d'épaisseur environ 20 mm, de poids 3 kg ; le miroir secondaire 46 est un miroir plan de diamètre 10 mm, les lames ou fenêtres 45 de fermeture sont en verre BK7, d'épaisseur 3 mm, de diamètre 80 mm, traité antireflet. Le miroir primaire est relié au barillet, le secondaire et les lames de fermeture sont fixés sur la plaque de fermeture du châssis 6.

L'accéléromètre 21 est un capteur qui détecte l'accélération du châssis dans une large bande de fréquence et à des niveaux très faibles. Les capteurs accélérométriques du type piézo-électriques conviennent à ce type d'application. L'accéléromètre retenu est un BRUEL et KJAER 8318 avec son amplificateur associé BRUEL et KJAER 2813. Il vient se fixer au centre de la face arrière du barillet à l'extrémité du châssis 6. Il pèse 500 g.

L'actionneur linéaire 8 est destiné à appliquer une force entre le chariot 1 et le châssis 6. Cette force déterminée par l'asservissement B sert à annuler les vibrations du châssis 6 mesurées par le capteur 21. L'actionneur 8 doit fournir une force de faible niveau dans une large bande de fréquence. Les actionneurs linéaires de type "haut-parleur" (à bobine mobile) conviennent parfaitement à cette application. L'actionneur retenu est un PRODERA EX6 et son amplificateur associé PRODERA 647/30 W. Le corps de l'actionneur est fixé sur le chariot 1 et la partie mobile contenant la bobine est fixé sur la face arrière du barillet à l'extrémité du châssis 6.

L'asservissement B reçoit le signal de mesure 22 provenant de l'amplificateur de mesure associé à l'accéléromètre 21. Il calcule à partir du signal de mesure 22 un signal de commande 23 qui est envoyé à l'amplificateur de commande associé à l'actionneur linéaire 8. La force délivrée par l'actionneur linéaire 8 engendre une accélération du châssis 6 en opposition de phase avec l'accélération mesurée par le capteur 21 permettant ainsi de contrôler l'amplitude des vibrations du châssis 6.

L'asservissement B est du type filtre du deuxième ordre :

$$\frac{\text{signal de commande}}{\text{signal de mesure}}(p) = \frac{a_2p^2 + a_1p + a_o}{p^2 + b_1p + b_o}$$

où p = jw est la variable de LAPLACE.

Ce filtre est aisément réglé grâce à une formulation de type filtre de Kalman. Il est équivalent à un retour en accélération filtrée et intégrale de l'accélération filtrée, laquelle accélération filtrée provient du signal de mesure 22 après passage dans un filtre passe-haut du premier ordre.

L'avantage du filtre passe-haut est d'éliminer l'effet des éventuels biais sur le signal de mesure. L'avantage du retour en accélération filtrée est de pouvoir modifier la fréquence propre naturelle de la liaison flexible 7 afin d'obtenir une fréquence propre en boucle fermée adaptée aux besoins de filtrage des vibrations provenant du chariot 1. L'avantage du retour en intégrale de l'accélération filtrée est de pouvoir générer un terme d'amortissement.

Ce filtre est réalisé en analogique.

La formulation de type filtre de Kalman revient à construire un estimateur de la vitesse de la charge utile à partir de la mesure d'accélération de cette dernière. cette estimation de vitesse est alors considérée comme le terme "intégrale de l'accélération filtrée" ci-dessus évoqué.

Ce qui précède est connu d'après le document EP-0.398.772.

Selon l'invention, le miroir secondaire 46 est commandé en position par rapport aux châssis 6 par un actionneur piézo-électrique schématisé en 50, agissant parallèlement à la direction D, par exemple formé d'un empilement de disques piézo-électriques collés les uns aux autres entre ce miroir secondaire et la plaque de fermeture.

Une troisième boucle d'asservissement C commande en position cet actionneur piézo-électrique 50 (au travers en pratique d'un amplificateur haute tension) en sorte de compenser la différence de chemin optique notée OPD détectée par la station de recombinaison 13 qui détecte les franges d'interférences (il peut s'agir en substance de la grandeur d de la figure 1 augmentée de divers effets perturbateurs internes).

La première boucle A permet de compenser une augmentation de variation maximale de la grandeur OPD et des exigences de vitesse.

La deuxième boucle B, qui compense les éventuelles vibrations générées par l'actionneur de la première boucle, permet de se dispenser de la mise en oeuvre d'une métrologie coûteuse de haute précision (par exemple interféromètre à laser). En fait, une métrologie laser de grande bande passante et de haute résolution serait nécessaire pour la réjection en boucle fermée des vibrations du premier étage en l'absence de cette deuxième boucle. Cette deuxième boucle permet de se contenter, comme système de métrologie, d'une unité de détection de franges (dans la station 13), adaptée à des mesures de OPD jusqu'à 10 Hz.

En outre, cette deuxième boucle réalise un bon découplage de la ligne de retard vis à vis des vibrations potentielles de la plate-forme dans le cas d'un interféromètre spatial.

Enfin, la troisième boucle C, qui compense les composantes de haute fréquence, agit sur une très faible masse mobile, ce qui évite l'apparition de forces perturbatrices transmises à la plate-forme.

On notera qu'on ne peut pas simplement remplacer la métrologie laser prévue par CONNES dans son dispositif décrit précédemment par une métrologie à franges, car :

1. pendant la phase de recherche des franges, le signal d'erreur à partir des franges n'est pas disponible. Il faut pourtant déplacer la ligne à retard vers la position théorique où l'on doit trouver les franges et ceci avec une précision et surtout une stabilité vibratoire très bonnes afin de trouver rapidement les franges et avec un bon contraste. Dans le système P. CONNES, c'est la métrologie laser qui fournit la mesure de qualité (résolution ~ 5 nm) à partir de laquelle le déplacement précis peut être réalisé. Sans cette métrologie, le moteur pas à pas, la courroie de transmission et le deuxième étage (qui doit dans ce cas être commandé de façon différente du mode "normal" de suivi des franges) ne seraient pas assez performants pour générer un déplacement précis et stable par commande en "boucle ouverte" (= sans mesure réelle du chemin optique introduit). Dans le cas de la présente invention, nous bénéficions des caractéristiques des deux premiers étages (déjà présents dans le document EP-0.398.772) qui permettent d'assurer un déplacement précis et stable sans mesure réelle du chemin optique introduit. En effet, le déplacement relativement grossier du premier étage est stabilisé par le deuxième étage grâce à la boucle accélérométrique et sans aucune modification de la commande de ce deuxième étage par rapport au mode "normal" de suivi des franges.

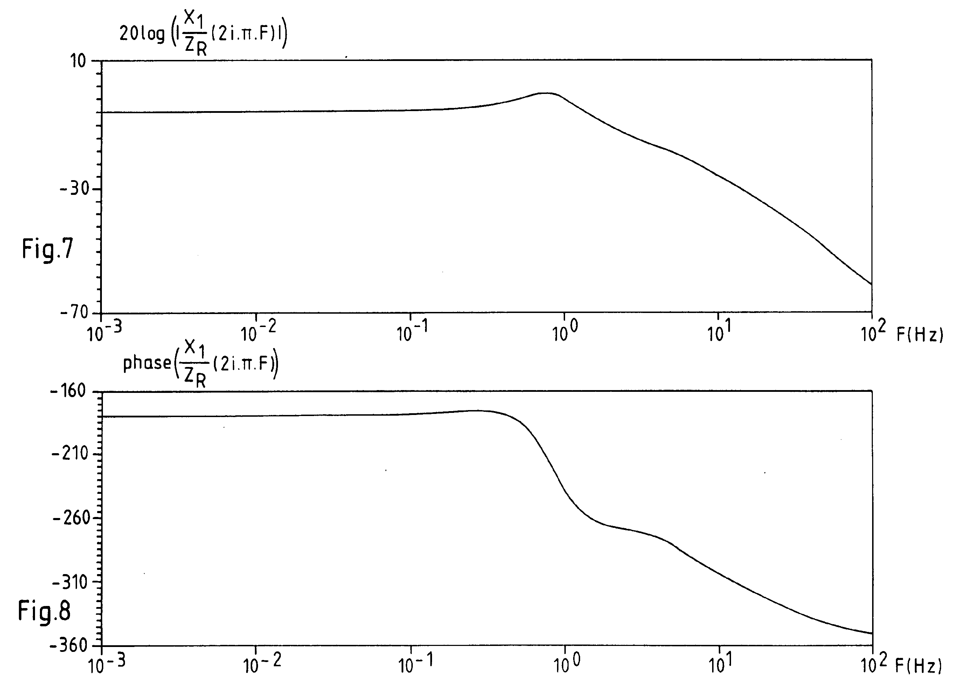

2. Dans le système P. CONNES, le laser est indispensable en cours de poursuite ("tracking") pour fournir une mesure à bande passante suffisante (> 100 Hz) afin de permettre la correction (réjection) par la boucle fermée des différences de chemin optique générées par la ligne à retard elle-même (passage des pas du moteurs pas-à-pas dont l'effet, après correction, est encore visible et à la limite de la spécification, comme le montre la page 61 et la figure 8.2 de la thèse HOLM : oscillation du deuxième étage qui n'est pas amortie par elle-même, frottement du système de roulement sur les rails mentionné page 64 de la thèse HOLM, ...).

Dans notre cas, le deuxième étage filtre les vibrations générées par le premier étage et il n'y a donc pas de différence de chemin optique significative à corriger par la boucle fermée de tracking.

On notera que le signal appliqué à l'actionneur piézo-électrique 50 est la différence de marche OPD mesurée sur les franges, sans mesure réelle de la position réelle du miroir secondaire.

Il est à noter que la grandeur OPD est un signal d'erreur issu du système de détection des franges placé dans la station de recombinaison. On peut le nommer "signal d'erreur de différence de chemin optique issu de la détection des franges", ou

"signal d'erreur de phase sur les franges", ou

"signal d'écart à la différence de marche nulle sur les franges".

Cette dernière version est probablement la meilleure.

Ce signal est équivalent à une erreur de position de la ligne à retard.

Différentes méthodes ont déjà été proposées pour l'élaboration de ce signal de différence de marche. On peut distinguer deux méthodes principales :

1. la modulation du chemin optique dans un des bras de l'interféromètre et élaboration du signal par démodulation synchrone (voir par exemple RODDIER F., LENA P., "long baseline Michelson interferometry with large ground-based telescope operatinf at optical wavelengths (II)" - Journal of Optics (Paris) Vol. 15, n° 6, 1984, pp. 363-374),

2. la dispersion spectrale des franges et élaboration du signal par transformée de FOURIER tridimensionnelle (voir par exemple VAKILI F., KOECHLIN L., "Aperture synthesis in space : computer fring blocking" - 1989 SPIE, Vol. 1130 New technologies for Astronomy, pp. 109-116).

La grandeur OPD appliquée comme signal d'erreur peut correspondre à un objet quelconque situé dans le champ d'observation. Lorsque dans ce champ se trouve, non seulement un objet "observé" que l'on veut caractériser à partir de l'analyse de ses franges, mais aussi un objet déjà connu, c'est avantageusement cet objet connu qui sert de référence, c'est-à-dire que la grandeur OPD est déduite de l'analyse des franges de cet objet de référence distinct de l'objet observé.

Le modèle mécanique permettant d'élaborer les lois de contrôle est représenté sur la figure 2B.

Les équations mécaniques sont :

$$m_1 \frac{d^2X_1}{dt^2} = F_1 - F_2 - K(X_1 - X_2)$$

$$m_2 \frac{d^2X_2}{dt^2} = F_2 - K(X_2 - X_1)$$

$$X_3 = K_3 U_3$$

où

$m_1$ : masse du chariot 1
$m_2$ : masse du châssis 6 et de la charge utile 2
$K$ : rigidité globale de la liaison flexible 7
$K_3$ : constante piézo-électrique de l'actionneur piézo-électrique 50
$F_1$ : force appliquée par le moteur 3
$F_2$ : force appliquée par le moteur 8
$U_3$ : tension appliquée à l'actionneur piézo-électrique 50

Le principe du contrôle est d'envoyer le signal d'erreur OPD à l'actionneur piézo-électrique 50 par l'intermédiaire de la boucle d'asservissement C afin de compenser la différence de chemin optique OPD mesurée. La tension de commande $U_3$ est envoyée au moteur 3 par l'intermédiaire de la boucle d'asservissement A de façon à désaturer l'actionneur piézo-électrique 50 dont la course est limitée à quelques 10 micromètres. Le signal accélérométrique 22 est envoyé à l'actionneur linéaire 8 par l'intermédiaire de la boucle d'asservissement B, totalement indépendante des deux autres, afin de réaliser le filtrage des vibrations générées par le déplacement du chariot 1.

Les lois de contrôle des différents asservissements sont conçues de la façon suivante ($p = 2i\pi f$ est la variable de LAPLACE) :

- boucle d'asservissement A :

$$F_1 = (- C_{10}/p - C_{11} - C_{12}.p).U_3$$

- boucle d'asservissement B :

$$F_2 = (- C_{21} p^2 - C_{22} p) X_2$$

- boucle d'asservissement C :

$$U_3 = \frac{1}{2K_3} (- C_{31} (Z - Z_R) - C_{32} p Z)$$

où les grandeurs Cij sont des coefficients de gain prédéterminés.

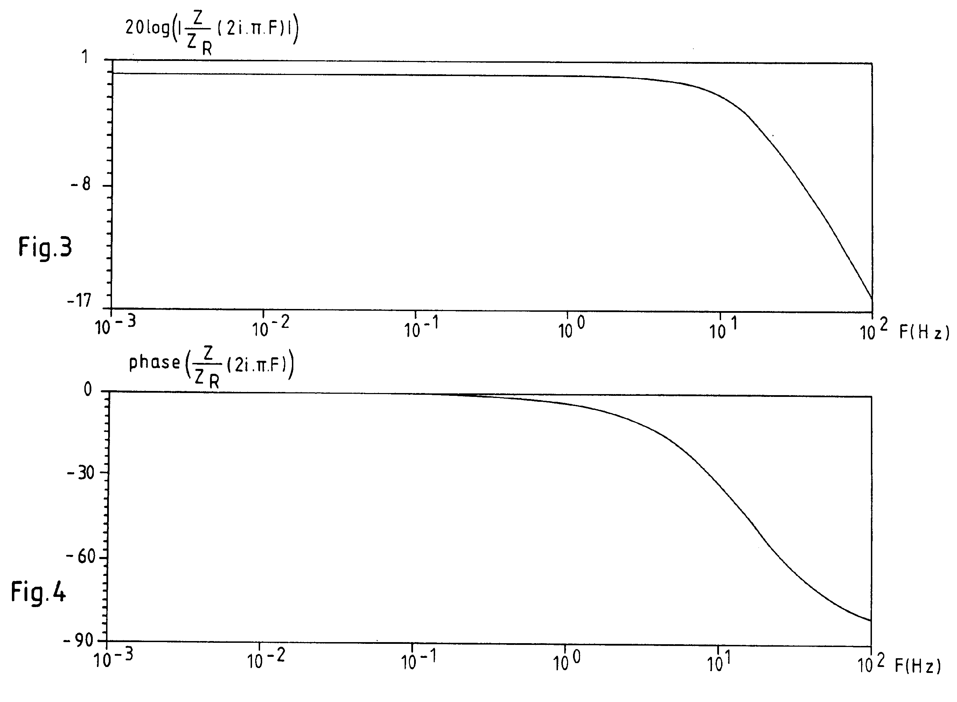

Les résultats obtenus avec ces lois de contrôle sont présentés sur les figures 3 à 14.

Les tracés représentent différentes fonctions de transfert sous la forme de diagrammes de BODE. La courbe du haut est le module en Décibels (20 $\log_{10}$(module)) de la fonction de transfert en fonction de la fréquence (f) de la perturbation $Z_R$. Elle donne donc le rapport de l'amplitude du paramètre considéré sur l'amplitude de la perturbation $Z_R$. La courbe du dessous est la phase de la fonction de transfert, c'est-à-dire le déphasage entre le paramètre considéré et la perturbation $Z_R$.

Les figures 3 et 4 mettent en évidence une bande passante en boucles fermées de 10 Hz. Cette bande passante peut être augmentée par le réglage du gain $C_{31}$.

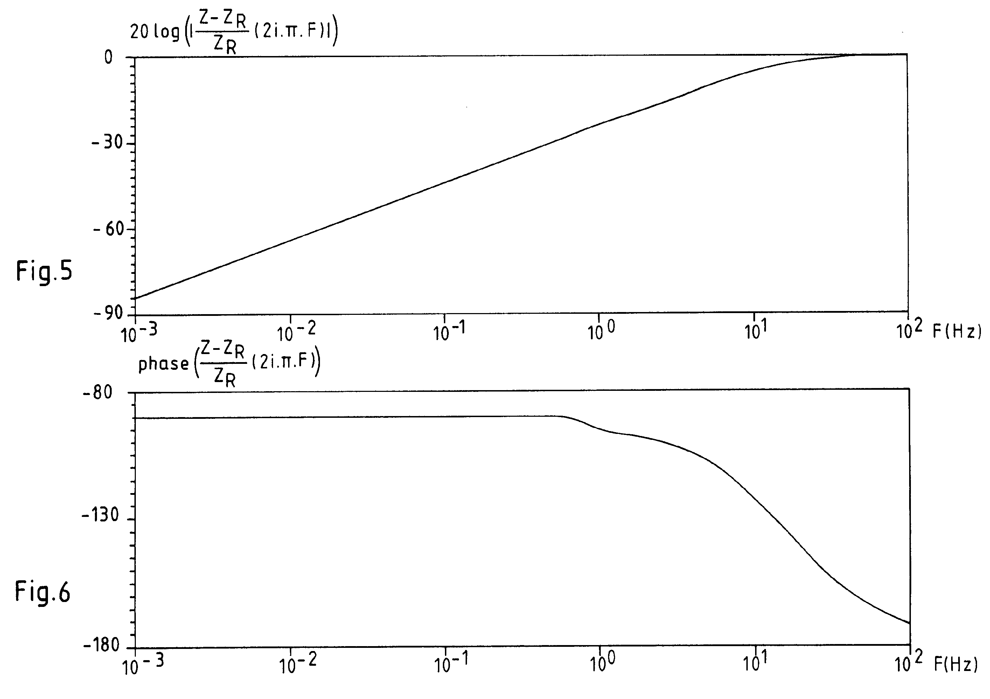

Les figures 5 et 6 montrent la courbe de réjection d'erreur en boucles fermées. On peut constater, par exemple, qu'une perturbation $Z_R$ à la fréquence de 0,1 Hz est corrigée avec une précision de 1/100ème.

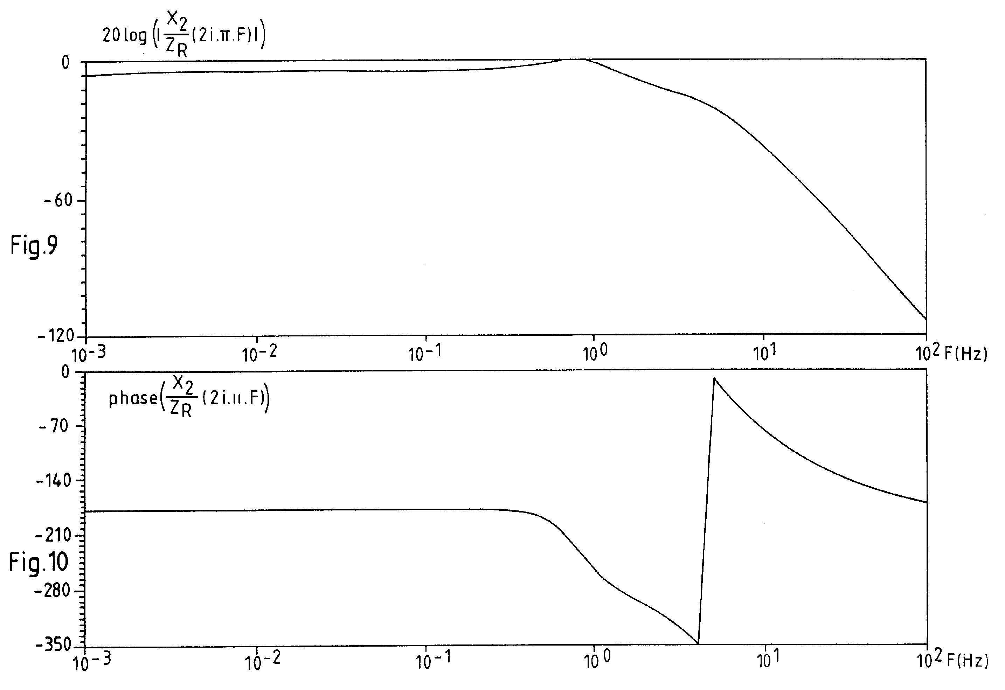

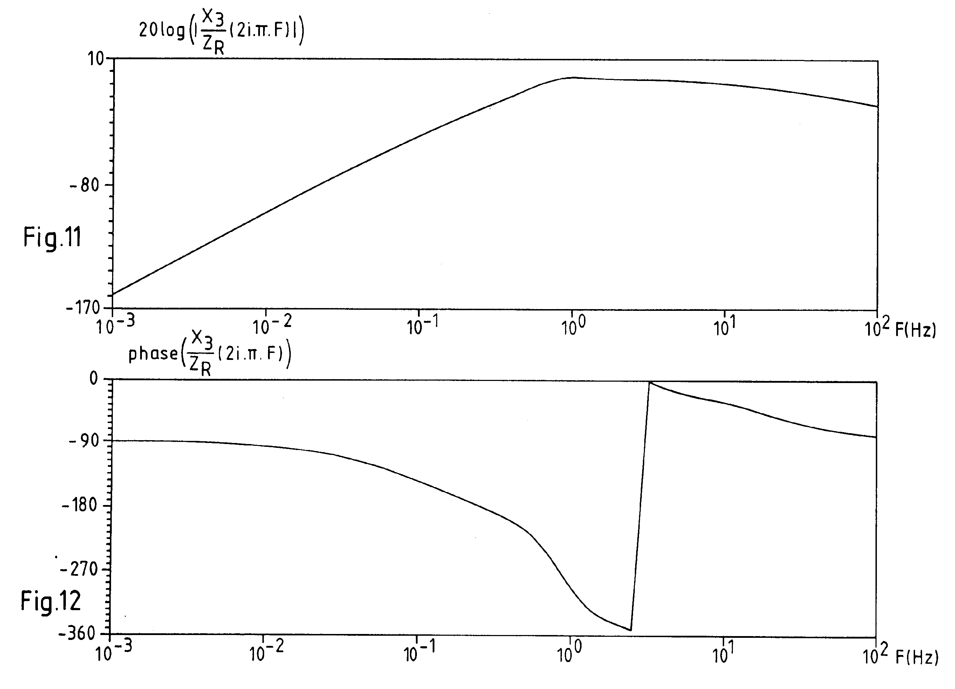

Les figures 7 à 14 illustrent le comportement des différents éléments en boucles fermées par rapport à la perturbation $Z_R$. Par exemple, pour une perturbation $Z_R$ à la fréquence de 0,1 Hz, le chariot se déplace d'une quantité $X_1$ quasi identique à la perturbation $Z_R$ (module = 0dB sur la figure 7), de même que le châssis se déplaçant de $X_2$ (figures 9 et 10) alors que l'actionneur piézo-électrique ne se déplace que de $\frac{Z_R}{100}$ (module de -40 dB sur figure 11)

A plus haute fréquence, par exemple 10 Hz, les mêmes figures montrent que le chariot et le châssis se déplacent peu, l'essentiel de la perturbation étant corrigé par l'actionneur piézo-électrique.

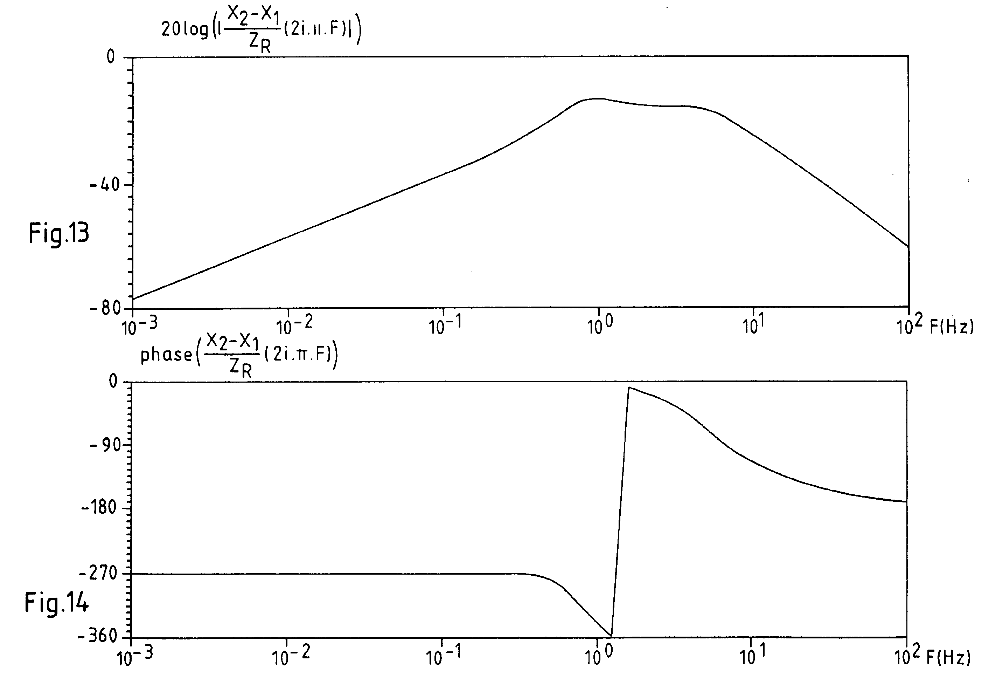

Les figures 13 et 14 montrent, quant à elles, comment se comporte la liaison flexible en fonction de la perturbation $Z_R$. La fonction de transfert représentée est la position relative du châssis 6 par rapport au chariot 1 soit $\frac{X_2 - X_1}{Z_R}$.

A titre d'exemple, une perturbation d'amplitude 10 μm à une fréquence de 1 Hz se traduit, au niveau de la liaison flexible 7, par un déplacement relatif entre châssis et chariot de 2,4 μm (-12 dB).

Il va de soi que la description qui précède n'a été proposée qu'à titre d'exemple non limitatif et que de nombreuses variantes peuvent être proposées par l'homme de l'art sans sortir du cadre des revendications.

**Revendications**

1. Dispositif interférométrique comportant deux collecteurs optiques (30A, 30B) destinés à être pointés sur un objet, une station de recombinaison (13) à laquelle ces collecteurs optiques sont connectés optiquement par deux bras d'interféromètre dont l'un comporte une ligne de retard (11) comportant une charge utile optique (2) formée d'un miroir primaire (41) et d'un miroir secondaire (46) et commandée en déplacement rectiligne suivant une direction (D) sur une voie de guidage par un dispositif comportant :
    - un chariot (1) portant un châssis (6) dont ce miroir primaire est solidaire et mobile le long de la voie de guidage, un moteur (3) pour l'entraînement de ce chariot le long de cette voie de guidage, une première boucle d'asservissement (A) de ce moteur d'entraînement, connectée à un capteur de position (5) adapté à détecter la position du chariot sur la voie de guidage, pour déplacer ce chariot selon une loi de consigne prédéterminée,

- des éléments (7) de liaison flexible reliant ce châssis au chariot (1) autorisant parallèlement à ladite direction (D) un débattement relatif entre le chariot et le châssis, au moins un actionneur (8) pour agir, en prenant appui sur le chariot, sur le châssis sous le contrôle d'une deuxième boucle d'asservissement (B) indépendante de la première boucle d'asservissement et connectée à un second capteur (21), formé d'un accéléromètre porté par le châssis et sensible à l'accélération de ce châssis parallèlement à ladite direction (D),

caractérisé en ce que le miroir secondaire (46) est relié à ce châssis par un actionneur piézo-électrique (50) agissant sur ce miroir secondaire parallèlement à cette direction (D) en étant commandé par une troisième boucle d'asservissement (C) recevant en entrée un signal d'erreur de chemin optique généré dans la station de recombinaison (13) à partir des franges d'un objet situé dans le champ d'observation des collecteurs optiques et délivrant également à l'une au moins des première et seconde boucles d'asservissement (A, B) un signal de désaturation de l'actionneur piézo-électrique (50).

2. Dispositif selon la revendication 1, caractérisé en ce que ladite troisième boucle d'asservissement (C) est exclusivement désaturée par ladite première boucle d'asservissement (A).

3. Dispositif selon la revendication 2, caractérisé en ce que la loi de contrôle de désaturation de la troisième boucle d'asservissement est du type proportionnel-dérivée.

4. Dispositif selon la revendication 2, caractérisé en ce que la loi de contrôle de désaturation de la troisième boucle d'asservissement est du type proportionnel-intégrale.

5. Dispositif selon l'une quelconque des revendications 1 à 4, caractérisé en ce que les collecteurs optiques sont des télescopes spatiaux.

6. Dispositif selon l'une quelconque des revendications 1 à 5, caractérisé en ce qu'il est porté par une plate-forme spatiale.

7. Dispositif selon l'une quelconque des revendications 1 à 6, caractérisé en ce que le signal d'erreur de chemin optique est défini à partir des franges d'un objet de référence, différent de l'objet observé principalement visé par l'interféromètre, mais situé dans le champ des collecteurs optiques.

## Claims

1. Interferometer device comprising two optical collectors (30A, 30B) adapted to be pointed at an object, a recombination station (13) to which said optical collectors are connected optically by two interferometer arms one of which includes a delay line (11) including an optical payload (2) formed by a primary mirror (41) and a secondary mirror (46) and controlled in rectilinear movement in a given direction (D) on a guide track by a device comprising:

- a carriage (1) carrying a chassis (6) to which said primary mirror is fastened and which is movable along said guide track, a motor (3) for driving said carriage along said guide track, a first drive motor control loop (A) connected to a position sensor (5) adapted to sense the position of the carriage on the guide track to move said carriage in accordance with a predetermined set point law,

- flexible linkage members (7) coupling said chassis to the carriage (1) enabling relative movement between the carriage and the chassis parallel to said direction (D), at least one actuator (8) adapted to bear on said carriage and act on said chassis under the control of a second control loop (B) independent of the first control loop and connected to a second sensor (21) in the form of an accelerometer carried by the chassis and responsive to acceleration of said chassis parallel to said direction (D),

characterized in that the secondary mirror (46) is coupled to said chassis by a piezo-electric actuator (50) acting on said secondary mirror parallel to said direction (D) and controlled by a third control loop (C) receiving as input an optical path error signal generated in the recombination station (13) from fringes of an object in the field of view of the optical collectors and delivering also to at least one of the first and second control loops (A, B) a piezo-electric actuator (50) desaturation signal.

2. Device according to claim 1 characterized in that said third control loop (C) is desaturated exclusively by said first control loop (A).

3. Device according to claim 2 characterized in that the desaturation control law of the third control loop is of the proportional-differential type.

4. Device according to claim 2 characterized in that the desaturation control law of said third control loop is of the proportional-integral type.

5. Device according to any one of claims 1 to 4 characterized in that the optical collectors are telescopes in space.

6. Device according to any one of claims 1 to 5 characterized in that it is carried by a spacecraft.

7. Device according to any one of claims 1 to 6 characterized in that the optical path error signal is determined from fringes of a reference object different from the object primarily observed at which the interferometer is aimed but situated in the field of the optical collectors.


**Patentansprüche**

1. Interferometrische Vorrichtung, die zwei optische Kollektoren (30A, 30B), die dafür bestimmt sind, auf ein Objekt gerichtet zu werden, und eine Rekombinationsstation (13) aufweist, mit der die die optischen Kollektoren über zwei Interferometerarme optisch verbunden sind, von denen einer eine Laufzeitkette (11) aufweist, die eine optischen Nutzlast (2) aufweist, die von einem Primärspiegel (41) und einem Sekundärspiegel (46) gebildet wird und die unter geradliniger Verschiebung gemäß einer Richtung (D) auf einer Führungsschiene durch eine Einrichtung betätigt wird, die die folgenden Merkmale aufweist:
   - einen Wagen (1), der einen Rahmen (6) trägt, der mit dem Primärspiegel fest verbunden und auf der Länge der Führungsschiene beweglich ist, einen Motor (3) zum Antrieb des Wagens auf der Führungsschiene, einen ersten Regelkreis (A) dieses Antriebsmotors, der mit einem Positionssensor (5) verbunden ist, der dafür angepaßt ist, die Position des Wagens auf der Führungsschiene abzutasten, um den Wagen gemäß einem vorbestimmten Stellgrößenverlauf zu verschieben;
   - flexible Verbindungselemente (7), die diesen Rahmen mit dem Wagen (1) verbinden und die parallel zur besagten Richtung (D) eine relative Verschiebung zwischen dem Wagen und dem Rahmen erlauben, wenigstens ein Betätigungsglied (8), um unter der Steuerung eines zweiten Regelkreises (B), der unabhängig vom ersten Regelkreis ist und der mit einem zweiten Sensor (21) verbunden ist, der durch einen Beschleunigungsmesser gebildet wird, der von dem Rahmen getragen wird und der für die Beschleunigung dieses Rahmens parallel zur besagten Richtung (D) empfindlich ist, auf den Rahmen einzuwirken, indem es sich auf den Wagen stützt,
   dadurch gekennzeichnet, daß der Sekundärspiegel (46) über ein piezoelektrisches Betätigungsglied (50) mit dem Rahmen verbunden ist, das parallel zur Richtung (D) auf diesen Sekundärspiegel einwirkt, wobei es durch einen dritten Regelkreis (C) betätigt wird, der als Eingang ein Fehlersignal des optischen Weges empfängt, das in der Rekombinationsstation (13) ausgehend von Interferenzstreifen eines sich im Beobachtungsfeld der optischen Kollektoren befindenden Objektes erzeugt wird, und der auch wenigstens einem der ersten oder zweiten Regelkreise (A, B) ein Entsättigungssignal des piezoelektrischen Betätigungsgliedes (50) zuführt.

2. Vorrichtung gemäß Anspruch 1, dadurch gekennzeichnet, daß der dritte Regelkreis (C) ausschließlich durch besagten ersten Regelkreis (A) entsättigt wird.

3. Vorrichtung gemäß Anspruch 2, dadurch gekennzeichnet, daß das Regelungsgesetz der Entsättigung des dritten Regelkreises vom Typ proportional-differential ist.

4. Vorrichtung gemäß Anspruch 2, dadurch gekennzeichnet, daß das Regelungsgesetz der Entsättigung des dritten Regelkreises vom Typ proportional-integral ist.

5. Vorrichtung gemäß einem der Ansprüche 1 bis 4, dadurch gekennzeichnet, daß die optischen Kollektoren Raumteleskope sind.

6. Vorrichtung gemäß einem der Ansprüche 1 bis 5, dadurch gekennzeichnet, daß sie von einer Raumplattform getragen wird.

7. Vorrichtung gemäß einem der Ansprüche 1 bis 6, dadurch gekennzeichnet, daß das Fehlersignal des optischen Weges ausgehend von den Interferenzstreifen eines Referenzobjektes bestimmt wird, das vom hauptsächlich durch das Interferometer beobachteten Objekt verschieden ist, sich aber dennoch im Feld der optischen Kollektoren befindet.

Fig.1

# Fig. 2A

EP 0 496 662 B1

Fig. 2B

$$20 \log \left( | \frac{Z}{Z_R} (2i.\pi.F) | \right)$$

Fig.3

$$phase \left( \frac{Z}{Z_R} (2i.\pi.F) \right)$$

Fig.4

EP 0 496 662 B1

Fig.5

Fig.6

15

$$20\log\left(\left|\frac{X_1}{Z_R}(2i.\pi.F)\right|\right)$$

Fig.7

$$\text{phase}\left(\frac{X_1}{Z_R}(2i.\pi.F)\right)$$

Fig.8

EP 0 496 662 B1

EP 0 496 662 B1

$$20 \log \left( \left| \frac{X_2}{Z_R} (2 i . \pi . F) \right| \right)$$

Fig.9

$$\text{phase}\left( \frac{X_2}{Z_R} (2 i . \text{\tiny II} . F) \right)$$

Fig.10

$$20\log\left(|\frac{X_3}{Z_R}(2i.\pi.F)|\right)$$

Fig.11

$$\text{phase}\left(\frac{X_3}{Z_R}(2i.\pi.F)\right)$$

Fig.12

EP 0 496 662 B1

18

$$20 \log \left( \left| \frac{X_2 - X_1}{Z_R} (2i.\text{II}.F) \right| \right)$$

Fig.13

$$\text{phase} \left( \frac{X_2 - X_1}{Z_R} (2i.\pi.F) \right)$$

Fig.14

EP 0 496 662 B1